# NEUE EUROPÄISCHE PATENTSCHRIFT

(11) **EP 1 813 459 B2**
(45) Veröffentlichungstag und Bekanntmachung des Hinweises auf die Entscheidung über den Einspruch: **25.02.2015**
(45) Hinweis auf die Patenterteilung: 11.01.2012
(21) Anmeldenummer: 06124466.1
(22) Anmeldetag: 21.11.2006
(51) Int. Cl.: B60K 5/08, G07C 5/00

(54) **Landwirtschaftlich nutzbares Motorfahrzeug**
Agricultural motor vehicle
Véhicule à moteur utilitaire agricole

(30) Priorität: 27.01.2006 DE 102006004143
(43) Veröffentlichungstag der Anmeldung: 01.08.2007
(73) Patentinhaber: CLAAS Selbstfahrende Erntemaschinen GmbH, 33428 Harsewinkel (DE)
(72) Erfinder: Hugenroth, Ludger, 48346, Ostbevern (DE); Twiefel, Herbert, 33428, Harsewinkel (DE); Isfort, Heinrich, 48249, Dülmen (DE)

(56) Entgegenhaltungen:
- EP-A- 1 378 863
- WO-A-03/058561
- DE-A1- 1 780 052
- DE-A1- 2 620 661
- DE-A1- 3 741 891
- DE-A1- 10 259 877
- DE-A1- 19 915 097
- US-A- 2 595 336
- US-A1- 2005 155 170
- US-A1- 2005 155 170
- Krone Exakt-Feldhäcksler Big X

## Beschreibung

Die Erfindung betrifft ein landwirtschaftlich nutzbares Motorfahrzeug nach dem Oberbegriff des Patentanspruchs 1.

Aufgrund des allgemeinen Strukturwandels in der Landtechnik und der immer größeren Dimensionierung von Ackerflächen erfordert dies einen immer höheren Leistungsbedarf der eingehen landwirtschaftlichen Arbeitsmaschinen, um diesen Herausforderungen gerecht zu werden.

Bereits aus der DE 1 780 052 ist ein landwirtschaftlich nutzbares Motorfahrzeug mit zwei Antriebseinheiten nach dem Oberbegriff des Anspruchs 1 bekannt, wobei jede der beiden Antriebseinheiten derart angeordnet ist, dass sich im echten Ein-Mann-Betrieb eine größtmögliche Flächenleistung beim Anbau von Geräten oder Maschinen an dieses Motorfahrzeug erzielen lasst. Zwecks Leistungsausgleich zwischen beiden Antriebseinheiten ist vorgesehen, dass die beiden Antriebseinheiten wahlweise miteinander kuppelbar sind sowie unter bestimmten Betriebsverhältnissen die Leistung beider Antriebsmaschinen wahlweise gemeinsam oder getrennt nutzbar ist. Zur Steuerung der zwei Antriebseinheiten sind dabei im Fahrerstand zwei spiegelbildlich zueinander angeordnete Steuerpulte und ein schwenkbarer Sitz vorgesehen.

Problematisch ist bei einer derartigen Ausgestaltung, dass die weitere Antriebseinheit stets als sogenannte Leistungsreserve zugeschaltet wird, was letztlich dazu führt, dass beide Antriebseinheiten nicht zeitgleich ihre Wartungsintervalle erreichen. Dadurch entsteht ein erhöhter Wartungsaufwand.

Eine weitere landtechnische Arbeitsmaschine mit einer baukastenartigen, maschinellen Grundausrüstung, die den raschen und vielfältigen Aufbau aller in einer modernen Landtechnik benötigter, selbstfahrender Geräte und Gerätekombinationen vom einfachen Transportwagen bis hin zum Mähdrescher, ermöglicht und zwei über ein Kupplungsstück miteinander verbundene Antriebseinheiten aufweist, ist in der DE 30 49 055 A1 offenbart. Aber auch an dieser Ausführungsform ist nachteilig, dass letztlich nicht gesichert ist, dass beide Antriebseinheiten zeitgleich ihre Wartungsintervalle erreichen und dadurch ein erhöhter Wartungsaufwand entsteht.

Der vorliegenden Erfindung liegt daher die Aufgabe zugrunde, die im Stand der Technik beschriebenen Nachteile zu vermeidet, und insbesondere eine Vorrichtung vorzuschlagen, die es ermöglicht, dass der Wartungsaufwand für ein mit mehreren Antriebseinheiten betriebenes Motorfahrzeug reduziert wird.

Erfindungsgemäß wird die Aufgabe durch ein Motorfahrzeug mit den kennzeichnenden Merkmalen des Patentanspruchs 1 gelöst.

Indem die wenigstens zwei Antriebseinheiten innerhalb eines bestimmten Zeitintervalls ein nahezu ausgeglichenes Betriebsstundenverhältnis aufweisen, kann sichergestellt werden, dass innerhalb des Zeitintervalls nicht eine Antriebseinheit einem erhöhten Verschleiß ausgesetzt ist, wodurch die Wartungsarbeiten an beiden Antriebseinheiten zeitgleich an einem Wartungstermin durchführbar sind, sodass sich der Wartungsaufwand für die Antriebseinheiten optimieren lässt Dieser Effekt ist besonders dann groß, wenn Antriebseinheiten zum Einsatz kommen, deren in Betriebsstunden angegebenen Wartungsintervalle unterschiedlich lang sind und die dann so betrieben werden, dass das Ende der an sich unterschiedlichen Wartungsintervalle nahezu zeitgleich erreicht wird.

Ein sehr exaktes Betriebstundenverhäftnis zwischen den wenigstens zwei Antriebseinheiten ist dann erreichbar, wenn das Betriebsstundenverhältnis den Vergleich der Betriebsstunden der wenigsten zwei Antriebseinheiten umfasst und die Ermittlung der Betriebsstunden die Betriebsdauer und antriebsspezifische Zustandsinformationen der jeweiligen Antriebseinheit berücksichtigt.

Eine vorteilhafte Ausgestaltung der Erfindung ergibt sich dann, wenn vor der Inbetriebnahme der jeweiligen Antriebseinheit anhand eines Vergleichs der Betriebsstunden das Betriebsstundenverhältnis der wenigstens zwei Antriebseinheiten ermittelt wird und zur Erreichung eines ausgeglichenen Beüiebsstundenverhältnisses, in Abhängigkeit von diesem Vergleich unter Berücksichtigung der Leistungsanforderung der landwirtschaftlichen Arbeitsmaschine, die weitere Leistungsabgabe zunächst von der weniger Betriebsstunden aufweisenden Antriebseinheit erfolgt, so dass die Beanspruchung der einzelnen Antriebseinheiten unabhängig von der Leistungsanforderung der landwirtschaftlichen Arbeitsmaschine nahezu ausgeglichen erfolgt, weiches vorteilhaft einen kongruenten Verschleiß der wenigstens zwei Antriebseinheiten bewirkt und somit eine nahezu zeitgleiche Wartung beider Antriebseinheiten ermöglicht,

Indem bei einer erhöhten Leistungsanforderung des landwirtschaftlich nutzbaren Motorfahrzeugs beide Antriebseinheiten zusammen ihre Leistung abgeben können und wobei bei sinkender und von einer Antriebseinheit zu bewältigende Leistungsanforderung dann zunächst nur die weniger Betriebsstunden aufweisende Antriebseinheit Leistung abgibt, ist gewährleistet, dass auch während schwankender Leistungsanforderungen der landwirtschaftlichen Arbeitsmaschine ein gleichmäßiger Verschleiß der wenigstens zwei Antnebseinheiten sichergestellt und die Erreichung eines einheitlichen Wartungstermins beider Antriebseinheiten gewährleistet ist.

In vorteilhafter Weiterbildung der Erfindung umfassen die antriebsspezifischen Zustandsinformationen die Motordrehzahl, den Füllstand des Motoröls, den Kraftstoffverbrauch und die Motortemperatur, so dass das Betriebsstundenverhältnis zur Erreichung nahezu gleicher Wartungsintervalle ein exaktes Belastungsverhältnis der wenigstens zwei Antriebseinheiten widerspiegelt

Eine besonders vorteilhafte Eignung für den landwirtschaftlichen Anwendungsfall ergibt sich dann, wenn die Antriebseinheiten als Dieselmotoren ausgeführt.

Indem die wenigstens zwei Antriebseinheiten zueinander V-förmig geneigt angeordnet sind und einen synchronisierten Betrieb aufweisen, können vorteilhaft Drehschwingungen der Antriebseinheiten reduziert werden. Dieser Effekt ist dann um so größer, wenn die Synchronität beim Betrieb beider Antriebseinheiten derart fein aufeinander abgestimmt ist, dass die von den Antriebseinheiten erzeugten Schwingungen sich gegenseitig nahezu aufheben

In einer weiteren vorteilhaften Ausgestaltung der Erfindung sind die zwei Antriebseinheiten axial parallel versetzt angeordnet, so dass eine optimale Riemenführung für den Hauptantrieb und weitere Aggregate erreicht werden kann.

Zur effizienten Erreichung eines ausgeglichenen Betriebsstundenverhältnisses zwischen den wenigstens zwei Antriebseinheiten ist in einer weiteren vorteilhaften Ausgestaltung vorgesehen, dass der Ausgleich des Betriebsstueldenverhältnisses manuell vom Bediener der landwirtschaftlichen Arbeitsmaschine über eine Bedien- und Anzeigeneinheit gesteuert oder automatisch mittels Sensoren von einer elektronischen Steuerung übernommen wird.

Damit die Wartungsarbeiten an den Antriebseinheiten effizient und kostensparend ausgeführt werden können, entspricht das Zeitintervall, in dem ein ausgeglichenes Betriebsstundenverhältnis erreicht werden soll, dem vom Hersteller der Antriebseinheit vorgegebenen Wartungsintervall.

Indem das landwirtschaftlich nutzbare Motorfahrzeug eine Bedien- und Anzeigeeinheit und eine Steuereinrichtung umfasst und die Steuereinrichtung über ein Datenübertragungssystem mit Antriebszustandsensoren und/oder Antriebszustandsdaten beinhaltenden Steuergeräten verbunden ist und die Bedien- und Anzeigeneinheit die Betriebsstunden der jeweiligen Antriebseinheit und/oder das Betriebsstundenverhältnis der wenigstens zwei Antriebseinheiten anzeigt, wird erfindungsgemäß sichergestellt, dass sich der Wartungsaufwand für ein mit mehreren Antriebseinheiten betriebenes Motorfahrzeug reduziert, da mittels der nunmehr möglichen Betriebsstundenübenuachung der Ablauf der Wartungsintervalle aufeinander abgestimmt werden kann.

Gmäß der Erfindung umfasst die Vorrichtung eine Bedien- und Anzeigeneinheit und eine Steuereinrichtung, wobei die Steuereinrichtung über ein Datenübertragungssystem mit Antriebszustandsensoren und/oder Antriebszustandsdaten beinhaltenden Steuergeräten verbunden ist und die Bedien- und Anzeigeneinheit die Betriebstunden der jeweiligen Antriebseinheit und/oder das Betriebsstundenverhältnis der wenigstens zwei Antriebseinheiten anzeigt und somit der Bediener über die relevanten Daten informiert ist.

Eine besonders vorteilhafte Ausgestaltung der Erfindung ergibt sich dann wenn das landwirtschaftlich nutzbare Motorfahrzeug als Feldhäcksler ausgeführt ist und eine Antriebseinheit zum Betreiben der Arbeitsorgane und die wenigstens eine weitere Antriebseinheit den Fahrantrieb des Motorfahrzeugs bildet, wobei die Arbeitsorgane im wesentlichen die Häckseltrommel, die Nachzerkleinerungseinnchtung, die Nachbeschleunigungseinrichtung und die Einzugsorgane umfassen. Dies hat insbesondere den Vorteil, dass die Arbeitsorgane unabhängig vom Fahrantrieb betrieben werden können, sodass Störungen in dem einen System nicht zwangsweise Auswirkungen auf den weiteren Antriebsstrang haben.

Eine besonders wartungsfreundliche Ausgestaltung der Erfindung ergibt sich dann, wenn die wenigstens zwei Antriebseinheiten einen gemeinsamen Betriebsstoff-Haushalt aufweisen. Dies hat vor allem den Vorteil, das Versorgungssysteme für die Antriebseinheiten nicht mehrfach vorgesehen werden müssen. Bezüglich eines verringerten Wartungsaufwandes tritt dieser Effekt dann besonders hervor, wenn die mehreren Antriebseinheiten nur über einen Ölkreislauf verfügen und dieser gemeinsame Ölkreislauf einen gemeinsamen Öl-Eintüllstutzen und eine gemeinsame Ölablasseinrichtung umfasst.

Eine die Störanfälligkeit senkende und damit den Wartungsaufwand verringernde Ausfuhrung ergibt sich auch dadurch, dass den wenigstens zwei Antriebseinheiten eine einzige Starteinrichtung für eine Antriebseinheit zugeordnet ist und die wenigstens eine weitere Antriebseinheit durch die von der Starteinrichtung gestartete Antriebseinheit in Betrieb genommen wird,

Da an einer Antriebseinheit in der Regel verschiedenste Versorgungsaggregate direkt angeflanscht sind ergibt sich eine weitere vorteilhafte Ausgestaltung der Erfindung wenn diese Aggregate an der Antriebseinheit angeordnet ist, die den ungehinderteren Zugang ermöglicht, sodass deren Wartung ohne aufwendige Demontagearbeiten möglich wird.

In einer weiteren vorteilhaften Ausgestaltung der Erfindung realisiert die eine Antriebseinheit den Antrieb der Arbeitsorgane und des Fahrantriebs wahrende die wenigstens eine weitere Antriebseinheit die Abbremsfunktion des landwirtschaftlich nutzbaren Fahrzeugs unterstützt Dies hat insbesondere den Vorteil dass das Motorfahrzeug beim Fahren auf der Straße bei hohen Geschwindigkeiten oder bei Bergabfahrt sicher gefuhrt und gegebenenfalls bei Gefahrensituationen schnell angehalten werden kann

Weitere vorteilhafte Ausgestaltungen sind Gegenstand weiterer Unteransprüche und werden nachfolgend anhand eines in mehreren Figuren dargestellten Ausführungsbeispiels näher erläutert. Es zeigen
- Figur 1: einen selbstfahrenden Feldhäcksler mit einem Vorsatzgerät und zwei Antriebseinheiten in Seitenansicht und Schnittdarstellung
- Figur 2: den Heckbereich eines selbstfahrenden Feldhäcksler in einer schematischen Draufsicht

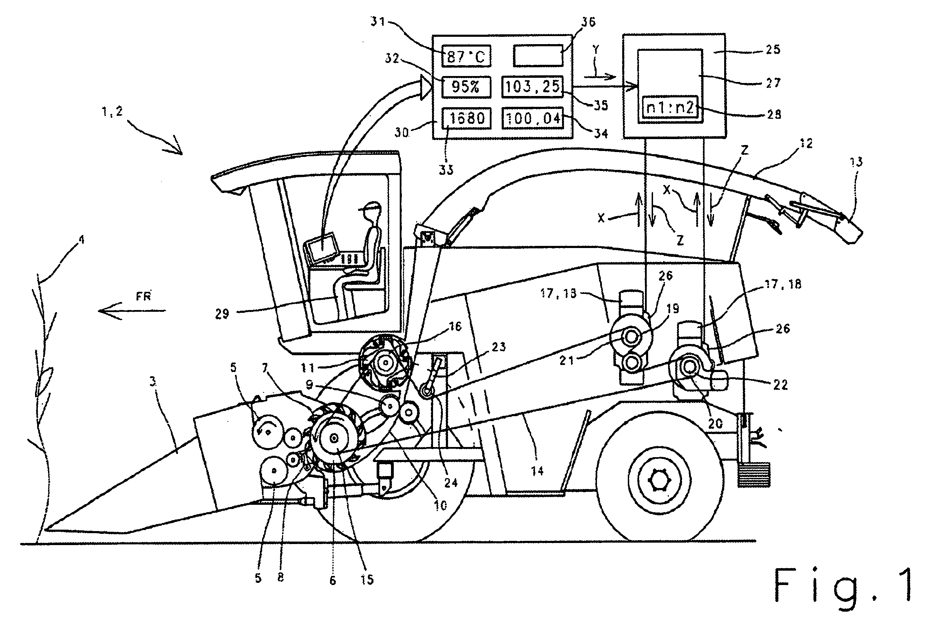

Figur 1 zeigt ein als selbstfahrender Feldhäcksler 1 ausgeführtes landwirtschaftlich nutzbares Motorfahrzeug 2 in Seitenansicht und Schnittdarstellung. Fronseitig in Fahrtrichtung FR gesehen ist dem Feldhacksler 1 ein Vorsatzgerät 3 zugeordnet, welches im Arbeitsbetrieb des Feldhackslers 1 das Erntegut 4 aufnimmt, gegebenenfalls zerkleinert und den nachfolgenden Einzugs- und Vorpresswalzen 5 zuführt. Die Einzugs- und Vorpresswalzen 5 leiten das Erntegut 4 der nachgeordneten und rotierenden Häcksetrommel 6 zu, deren umlaufenden Häckselmesser 7 das Erntegut 4 an einer Gegenschneide 8 zerkleinern, Das zerkleinerte Erntegut 4 wird sodann an eine Nachzerkleinerungseinrichtung 9 übergeben, die die Erntegutkörner, wie beispielsweise Mais anschlägt und über einen Förderschacht 10 an einen Nachbeschleuniger 11 übergibt. Der Nachbeschleuniger 11 beschleunigt das zerkleinerte Erntegut 4 und fördert es über einen horizontal und vertikal verstellbaren Auswurfkrümmer 12 und eine diesem verschwenkbar zugeordnete Auswurfkrümmerklappe 13 zur Regelung der Wurfweite des Erntegutstrahls auf eine nicht abgebildete, dem Auswurfkrümmer 12 zugeordnete Transportvorrichtung.

Im dargestellten Ausführungsbeispiel sind die Häckseltrommel 6 und der Nachbeschleuniger 11 über einen gemeinsamen Antriebsriemen 14 und diesem zugeordnete Riemenscheiben 15, 16 mit zwei als Dieselmotoren gleicher oder unterschiedlicher Leistungsklasse ausgeführten Antriebseinheiten 17. 18 verbunden. Den Antriebseinheiten sind an sich bekannte und deshalb nicht naher beschriebene Schaltkupplungen 19, 20 zugeordnet, mittels derer die Antriebseinheiten 17, 18 in noch naher zu beschreibender Weise zu- oder abgeschaltet werden können Im dargestellten Ausführungsbeispiel sind die Schaltkupplungen 19. 20 unmittelbar in die den Antriebseinheiten 17, 18 zugeordneten Riemenscheiben 21, 22 integriert. Zur schlupfarmen Übertragung der Antriebsenergie wird der Antriebsriemen 14 dauerhaft von einer oder mehreren Spanneinrichtung 23 über Spannrollen 24 vorgespannt Zudem werden in an sich bekannter und deshalb nicht dargestellter Weise das Vorsatzgerät 3, die der Häckseltrommel 6 vorgeordneten Einzugs - und Vorpresswalzen 5 und die Nachzerkleinerungseinrichtung 8 von den Antriebseinheiten 17, 18 angetrieben.

Gemäß Fig. 1 ist dem landwirtschaftlich nutzbaren Motorfahrzeug 2 eine elektromotorisch, elektrohydraulisch oder elektronisch arbeitende Steuereinrichtung 25 zugeordnet, die so ausgelegt und mit den Antriebseinheiten 17, 18 verbundnen ist, dass sie die Betriebsdauer der einzelnen Antriebseinheiten 17, 18 ermitteln und wiederabrufbar speichern kann Es liegt im Rahmen der Erfindung dass die Steuereinrichtung 25 unmittelbar mit den Motorsteuerungen 26 der Antriebseinheiten 17, 18 gekoppelt ist und von diesen sogenannte Betriebsdauersignale X empfängt und aus diesen die Betriebsstunden der einzelnen Antriebseinheiten 17, 18 ermittelt. Über einen in der Steuereinrichtung 25 hinterlegten Algorithmus 27 wird aus den Betriebsstunden der einzelnen Antriebseinheiten 17,18 das erfindungsgemäße Betriebsstundenverhältnis 28 ermittelt, was letztlich nichts anderes ist, als ein Vergleich der Betriebsstunden der Antriebseinheiten 17, 18 miteinander und der Generierung einer Information, inwieweit die Betriebsstunden der einen Antriebseinheit 17. 18 den Betriebsstunden der anderen Antriebseinheit 17,18 vorauseilen oder nachlaufen.

In der Regel verfügen landwirtschaftlich nutzbare Motorfahrzeuge über eine im Sichtbereich des Betreibers 29 liegende Anzeigeeinheit 30 die verschiedenste Betriebsparameter der Antriebseinheiten 17, 18 anzeigen können. Im dargestellten Ausführungsbeispiel umfasst die Anzeigeeinheit 30 ein Anzeigefeld "Motortemperatur" 31. ein Anzeigefeld "Füllstand Öl" 32 sowie ein Anzeigefeld "Motordrehzahl" 33. Die in diesen Anzeigefeldern visualisierten Parameter werden in an sich bekannter und deshalb nicht dargestellter Weise generiert. Indem diese Informationen als Eingangssignale Y an die Steuereinrichtung 25 übermittelt werden, können bei der Ermittlung der Betriebsstunden und damit des erfindungsgemäßen Betnebsstundenverhältnisses 28 verschleißrelevante Kriterien wie die "Motortemperatur" 31, der "Öl-Füllstand" 32 sowie die "Motordrehzahl" 33 berücksichtigt werden Damit bilden die "Motortemperatur" 31, der "Öl-Füllstand" 32 sowie die "Motordrehzahl" 33 die erfindungsgemäßen antriebsspezifischen Zustandsinformationen, welche bei der Ermittlung des Betriebsstundenverhältnisses 28 berücksichtigt werden. Es liegt im Rahmen der Erfindung, dass auch ein Feld "Kraftstoffverbrauch" vorgesehen sein könnte, sodass auch der Kraftstoffverbrauch als antriebsspezifische Zustandsinformation herangezogen werden kann.

Gemäß Figur 1 kann die Anzeigeeinheit 30 so beschaffen sein, dass sowohl die Betriebsstunden jeder Antriebseinheit 17, 18 in einem Betriebsstundenanzeigefeld 34, 35 als auch das Betriebsstundenverhältnis 28 der wenigstens zwei Antriebseinheiten 17, 18 in einem Anzeigefeld 36 visualisiert werden. Je nach Ausgestaltung der Anzeigen 34-36, können hier Balkendiagramme aber auch numerische Angaben, wie die zahlenmäßige Angabe der Betriebsstunden oder die prozentuale Angabe des Betnebsstundenverhaltnisses vorgesehen sein, Auf diese Weise erhält der Betreiber 29 des Motorfahrzeugs 2 einen Hinweis über die von den Antriebseinheiten 17, 18 geleisteten Betriebsstunden und kann die Zu- und Abschaltung der Antriebseinheiten 17, 18 so steuern, dass sich in einem bestimmten Zeitintervall, was dem Wartungsintervall der Antriebseinheiten 17, 18 entsprechen sollte, eine nahezu ausgeglichenes Betriebsstundenverhältnis 28 oder eine annährend gleiche Betriebstundenzahl ergibt, gemäß des erfindung wird in der Steuereinnchtung 25 in Abhängigkeit von dem Betriebsstundenverhältnis 28 oder den Betriebsstunden unmittelbar ein Steuersignal Z generiert, welches die jeweiligen Antriebseinheiten 17, 18 ein- oder ausschaltet. Auf diese Weise wird es möglich, dass das Inbetriebnehmen und Ausschalten der verschiedenen Antriebseinheiten 17, 18 von den bereits geleisteten Betriebsstunden und dem aufgetretenen durch diverse Betriebsparameter abschätzbaren Verschleiß abhängig gemacht werden kann

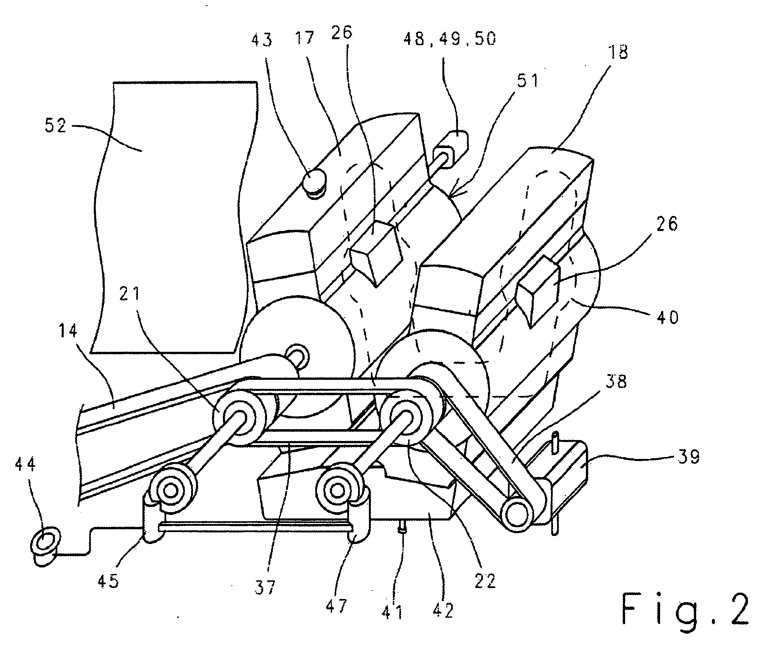

Eine verschleißminimierende und damit den Wartungsaufwand reduzierende Ausführung wird auch dadurch erreicht, wenn, wie in Fig. 2 dargestellt, die wenigstens zwei Antriebseinheiten 17, 18 zueinander V-förmig geneigt angeordnet sind. Wenn dann die Antriebseinheiten 17. 18 über ihre Motorsteuerungen 26 auch noch in der Weise synchronisiert betrieben werden, das sich die von den einzelnen Antriebseinheiten 17, 18 erzeugten Erregung gegenseitig nahezu aufheben, wird eine weitere Minimierung des Verschleißes erreicht.

Indem die Antriebseinheiten 17, 18 eine zueinander parallele aber achsversetzte Lage einnehmen, können die beiden Antriebseinheiten 17, 18 unmittelbar über einen Riemenantrieb 37 miteinander gekoppelt sein und nur eine der Riemenscheiben 15, 16 der Antriebseinheiten 17, 18 muss von dem bereits beschriebenen Antriebsriemen 14 umschlungen werden. Dies hat den Vorteil, dass wegen der räumlichen Nahe der Antriebseinheiten 17. 18 eine starke Umlenkung des Antriebsriemens 14 wie das bei Umschlingung beider Riemenscheiben 21, 22 der Fall sein müsste, entfallen kann. Indem zumindest der rückwärtigen Antriebseinheit 18 ein weiterer Antriebsstrang 38 zugeordnet ist kann zudem dafür gesorgt werden, dass diese weitere Antriebseinheit 18 den schematisch dargestellten Fahrantrieb 39 antreibt, während die weitere Antriebseinheit 17 die zuvor beschriebenen Arbeitsorgane 3,5,6,9,11 mit Antriebsenergie versorgt. Dies reduziert einerseits die Belastung jeder Antriebseinheit 17, 18 führt andererseits aber auch dazu, dass ein nahezu ausgeglichenes Betriebsstundenverhaltnis 28 erzielt wird.

Eine effiziente und schnell durchführbare Wartung wird auch dann erreicht, wenn die Antriebseinheiten 17, 18 über einen gemeinsamen Betriebsstoff-Haushalt verfügen In einer Ausführungsform kann dies beispielsweise der Motorölkreislauf 40 sein, indem den mehreren Antriebseinheiten 17. 18 eine gemeinsame Ölwanne 41 oder zwei miteinander verbundene Ölwannen 41 zugeordnet sind. wobei die Ölwanne 41 nur eine Ölablasseinrichtung 42, wie etwa eine Ölablassschraube, umfasst, Zugleich verfügen beide Antriebseinheiten 17, 18 nur über einen gemeinsame Öleinfüllstutzen 43

Zudem kann der Vielzahl von Antriebseinheiten 17, 18 eine gemeinsame Starteinrichtung 44 zugeordnet sein über welche der Betreiber 29 des Motorfahrzeugs 2 eine der Antriebseinheiten 17 in an sich bekannter Weise mittels eines sogenannten Anlassers 45 startete, währende die weitere Antriebseinheit 18 dann von der ersten Antriebseinheit 17 gestartet wird. Dies kann im einfachsten Fall dadurch erfolgen, dass der bereits beschriebene Riemenantrieb 37 den Anlasser 47 der weiteren Antriebseinheit 18 und damit diese selbst startet.

Die Wartung der Antriebseinheiten 17, 18 wird auch dadurch noch vereinfacht, wenn beispielsweise die derartigen Antriebseinheiten zugeordneten weiteren Aggregate 48, wie etwa direkt angetrieben Hydropumpen 49 oder Lichtmaschinen 50, an der Antriebseinheit 17, 18 adaptiert sind, die einen ungehinderteren Zugang ermöglicht. Im dargestellten Ausführungsbeispiel wird dies dadurch erreicht, dass das weitere Aggregat 48 an der Stirnseite 51 einer Antriebseinheit 17, 18 angeordnet ist, die der seitlichen Verkleidung 52 des Motorfahrzeugs 2 am nächsten ist
Da landwirtschaftlich nutzbare Motorfahrzeuge regelmäßig während des Arbeitens auf dem Feld hohe Leistungen verfügbar halten müssen und im sogenannten Straßenbetrieb eher in einem niedrigen Leistungsbereich arbeiten kann in einer vorteilhaften Ausgestaltung auch vorgesehen sein, dass eine der Antriebseinheiten 17. 18 bei Straßenfahrt als Bremse arbeitet, sodass sich das Bremsverhalten des Motorfahrzeugs bei Straßenfahrt erheblich verbessert und zugleich die originären Bremseinrichtungen verschleißminimierend und damit wartungsreduzierend geschont werden.

### Bezugszeichenliste

| | | | |
|---|---|---|---|
| 1 | Feldhäcksler | 32 | Anzeigefeld "Füllstand Öl" |
| 2 | Motorfahrzeug | 33 | Anzeigefeld "Motordrehzahl" |
| 3 | Vorsatzgerät | 34 | Betriebsstundenanzeige |
| 4 | Erntegut | 35 | Betriebsstundenanzeige |
| 5 | Einzugs- und Vorpresswalzen | 36 | Anzeigefeld |
| 6 | Häckseitrommel | 37 | Riemenantrieb |
| 7 | Häckselmesser | 38 | Antriebsstrang |
| 8 | Gegenschneide | 39 | Fahrantrieb |
| 9 | Nachzerklemerungseinrichtung | 40 | Motorölkreislauf |
| 10 | Förderschacht | 41 | Ölwanne |
| 11 | Nachbeschleuniger | 42 | Ölablasseinrichtung |
| 12 | Auswurfkrummer | 43 | Öleinfüllstutzen |
| 13 | Auswurfkrümmerklappe | 44 | Starteinrichtung |
| 14 | Antriebsriemen | 45 | Anlasser |
| 15 | Riemenscheibe | 46 | |
| 16 | Riemenscheibe | 47 | Anlasser |
| 17 | Antriebseinheit | 48 | Aggregat |
| 18 | Antriebseinheit | 49 | Hydropumpe |
| 19 | Schaltkupplung | 50 | Lichtmaschine |
| 20 | Schaltkupplung | 51 | Stirnseite |
| 21 | Riemenscheibe | 52 | Verkleidung |
| 22 | Riemenscheibe | | |
| 23 | Spanneinrichtung | X | Betriebsdauersignal |
| 24 | Spannrolle | Y | Eingangssignal |
| 25 | Steuereinrichtung | Z | Steuersignal |
| 26 | Motorsteuerung | | |
| 27 | Algorithmus | | |
| 28 | Betriebsstundenverhältnis | | |
| 29 | Betreiber | | |
| 30 | Anzeigeeinheit | | |
| 31 | Anzeigefeld "Motortemperatur" | | |

## Patentansprüche

1. Landwirtschaftlich nutzbares Motorfahrzeug mit wenigstens zwei in einem Antriebsstrang getrennt und/oder gemeinsam betreibbaren Antriebseinheiten (17, 18) mit jeweils gleichen und/oder unterschiedlichen Leistungsabgabemöglichkeiten und wobei jede Antriebseinheit (17, 18) Mittel zur Erfassung der Betriebsstunden umfasst,
**dadurch gekennzeichnet, dass**
das landwirtschaftlich nutzbare Motorfahrzeug (2) eine Bedien- und Anzeigeneinheit (30) und eine Steuereinrichtung (26) umfasst und die Steuereinrichtung (25) über ein Datenübertragungssystem (33) mit Antriebszustandssensoren und/oder Antriebszustandsdaten beinhaltenden Steuergeräten (26) verbunden ist und
die Bedien- und Anzeigeneinheit (30) die Betriebsstunden der jeweiligen Antriebseinheit (17, 18) und/oder das Betriebsstundenverhältnis der wenigstens zwei Antriebseinheiten (17, 18) anzeigt,
wobei die Steuereinrichtung (25) in Abhängigkeit des Betriebsstundenverhältnisses oder der Betriebsstunden ein Steuersignal (Z) generiert das die jeweiligen Antriebseinheiten (17, 18) derart ein- oder ausschaltet, dass die wenigstens zwei Antriebseinheiten (17, 18) innerhalb eines bestimmten, dem Wartungsintervall der jeweiligen Antriebseinheit (17, 18) entsprechenden, Zeitintervalls ein ausgeglichenes Betriebsstundenverhältnis (28) aufweisen und wobei
bei einer erhöhten Leistungsanforderung des landwirtschaftlich nutzbaren Motorfahrzeugs (1,2) beide Antriebseinheiten (17, 18) zusammenschaltbar sind und bei sinkender und von einer Antriebseinheit (17, 18) zu bewältigender Leistungsanforderung, dann nur die weniger Betriebsstunden aufweisende Antriebseinheit (17, 18) ihre Leistung abgibt.

2. Landwirtschaftlich nutzbares Motorfahrzeug nach Anspruch 1,
**dadurch gekennzeichnet,**
**dass** das Betriebsstundenverhältnis (28) den Vergleich der Betriebsstunden der wenigstens zwei Antriebseinheiten (17, 18) umfasst und die Ermittlung der Betriebsstunden die Betriebsdauer und antriebsspezifische Zustandsinformationen der jeweiligen Antriebseinheit (17, 18) berücksichtigt

3. Landwirtschaftlich nutzbares Motorfahrzeug nach einem der vorhergehenden Ansprüche,
**dadurch gekennzeichnet,**
**dass** vor der Inbetriebnahme der jeweiligen Antriebseinheit (17, 18) anhand eines Vergleichs der Betriebsstunden der jeweiligen Antriebseinheit (17, 18), das Betriebsstundenverhältnis (28) der wenigstens zwei Antriebseinheiten (17, 18) ermittelt wird und zur Erreichung eines ausgeglichenen Betriebsstundenverhältnisses (28), in Abhängigkeit von diesem Vergleich unter Berücksichtigung der Leistungsanforderung des Motorfahrzeugs (1, 2) die weitere Leistungsabgabe zunächst von der weniger Betriebsstunden aufweisenden Antriebseinheit (17, 18) erfolgt.

4. Landwirtschaftlich nutzbares Motorfahrzeug nach einem der vorhergehenden Ansprüche,
**dadurch gekennzeichnet,**
**dass** die antriebsspezifischen Zustandsinformationen die Motordrehzahl, der Füllstand des Motoröls, der Kraftstoffverbrauch und die Motortemperatur sein können.

5. Landwirtschaftlich nutzbares Motorfahrzeug nach einem der vorhergehenden Anspruche,
**dadurch gekennzeichnet,**
**dass** die Antriebseinheiten (17, 18) als Dieselmotoren gleicher oder unterschiedlicher Leistungsklasse ausgeführt sind.

6. Landwirtschaftlich nutzbares Motorfahrzeug nach einem der vorhergehenden Ansprüche,
**dadurch gekennzeichnet,**
**dass** die wenigstens zwei Antriebseinheiten (17, 18) zueinander V-förmig geneigt angeordnet sind und einen synchronisierten Betrieb aufweisen.

7. Landwirtschaftlich nutzbares Motorfahrzeug nach einem der vorhergehenden Ansprüche,
**dadurch gekennzeichnet,**
**dass** die Anordnung der wenigstens zwei Antriebseinheiten (17. 18) axial parallel versetzt erfolgt.

8. Landwirtschaftlich nutzbares Motorfahrzeug nach einem der vorhergehenden Ansprüche,
**dadurch gekennzeichnet,**
**dass** der Ausgleich des Betriebsstundenverhältnisses (28) der Antriebseinheiten (17,18) manuell vom Betreiber (29) des Motorfahrzeugs (1, 2) über die Anzeigeeinheit (30) gesteuert oder automatisch mittels Sensoren von einer elektronischen Steuerung übernommen wird.

9. Landwirtschaftlich nutzbares Motorfahrzeug nach einem der vorhergehenden Ansprüche,
**dadurch gekennzeichnet,**
**dass** das landwirtschaftlich nutzbare Motorfahrzeug (2) als Feldhäcksler (1) ausgeführt ist und eine Antriebseinheit (17, 18) zum Betreiben der Arbeitsorgane (3, 5. 6, 9, 11) und die wenigstens eine weitere Antriebseinheit (17, 18) den Fahrantrieb (39) des Motorfahrzeugs (1, 2) bildet.

10. Landwirtschaftlich nutzbares Motorfahrzeug nach Anspruch 9,
**dadurch gekennzeichnet,**
**dass** die Arbeitsorgane (3, 5, 6, 9, 11) die Häckseltrommel (6), die Nachzerkleinerungseinrichtung (9), die Nachbeschleunigungseinrichtung (11) und die Einzugsorgane (3, 5) umfassen

11. Landwirtschaftlich nutzbares Motorfahrzeug nach einem der vorhergehenden Ansprüche,
**dadurch gekennzeichnet,**
**dass** die wenigstens zwei Antriebseinheiten (17, 18) einen gemeinsamen Betriebsstoff-Haushalt aufweisen

12. Landwirtschaftlich nutzbares Motorfahrzeug nach Anspruch 11,
**dadurch gekennzeichnet,**
**dass** der gemeinsame Betriebsstoff-Haushalt wenigstens den Motorölkreislauf (40) umfasst und wobei den wenigstens zwei Antriebseinheiten (17, 18) ein gemeinsamer Öl-Einfüllstutzen (43) und eine gemeinsame Ölablasseinrichtung (42) zugeordnet ist

13. Landwirtschaftlich nutzbares Motorfahrzeug nach einem der vorhergehenden Ansprüche,
**dadurch gekennzeichnet,**
**dass** den wenigstens zwei Antriebseinheiten (17, 18) eine Starteinrichtung (44) für eine Antriebseinheit (17) zugeordnet ist und die wenigstens eine weitere Antriebseinheit (18) durch die von der Starteinrichtung (44) gestartete Antriebseinheit (17) in Betrieb genommen wird.

14. Landwirtschaftlich nutzbares Motorfahrzeug nach einem der vorhergehenden Anspruche,
**dadurch gekennzeichnet,**
**dass** die wenigstens zwei Antriebseinheiten (17, 18) so konfiguriert sind, dass wartungsintensive und unmittelbar an wenigstens einer der Antriebseinheiten (17, 18) adaptierte Aggregate (48-50) an der Antriebseinheit (17 18) angeordnet ist, die den ungehinderten Zugang ermöglicht.

15. Landwirtschaftlich nutzbares Motorfahrzeug nach einem der vorhergehenden Ansprüche,
**dadurch gekennzeichnet,**
**dass** die eine Antriebseinheit (17) den Antrieb der Arbeitsorgane (3, 5. 6, 9, 11) und/oder des Fahrantriebs (39) bewirkt und die wenigstens eine weitere Antriebseinheit (18) die Abbremsfunktion des Motorfahrzeugs (1, 2) unterstützt.

## Claims

1. An agriculturally usable motor vehicle comprising at least two drive units (17, 18) operable separately and/or jointly in a drive train and each having the same and/or different power delivery options and wherein each drive unit (17, 18) includes means for detecting the operating hours,
**characterised in that**
the agriculturally usable motor vehicle (2) includes an operating and display unit (30) and a control device (25) and the control device (25) is connected by way of a data transmission system (33) to control devices (26) including drive state sensors and/or drive state data and the operating and display unit (30) displays the operating hours of the respective drive unit (17, 18) and/or the operating hours ratio of the at least two drive units (17, 18), wherein the control device (25) in dependence on the operating hours ratio or the operating hours generates a control signal (Z) which switches the respective drive units (17, 18) on or off in such a way that the at least two drive units (17, 18) have a balanced operating hours ratio (28) within a given time interval corresponding to the maintenance interval of the respective drive unit (17, 18) and wherein upon an increased power requirement of the agriculturally usable motor vehicle (1, 2) both drive units (17, 18) can be brought into operation together and with a falling power requirement which is to be managed by one drive unit (17, 18) then only the drive unit (17, 18) having fewer operating hours delivers its power.

2. An agriculturally usable motor vehicle according to claim 1 **characterised in that** the operating hours ratio (28) includes comparison of the operating hours of the at least two drive units (17, 18) and determining the operating hours takes account of the operating duration and drive-specific state information of the respective drive unit (17, 18).

3. An agriculturally usable motor vehicle according to one of the preceding claims **characterised in that** before the respective drive unit (17, 18) is brought into operation the operating hours ratio (28) of the at least two drive units (17, 18) is ascertained on the basis of a comparison of the operating hours of the respective drive unit (17, 18) and to attain a balanced operating hours ratio (28), in dependence on said comparison and taking into account the power demand of the motor vehicle (1, 2), the further power delivery is firstly effected by the operating unit (17, 18) having fewer operating hours.

4. An agriculturally usable motor vehicle according to one of the preceding claims **characterised in that** the drive-specific state information can be the engine rotary speed, the filling level of the engine oil, the fuel consumption and the engine temperature.

5. An agriculturally usable motor vehicle according to one of the preceding claims **characterised in that** the drive units (17, 18) are in the form of diesel engines or are of different power classes.

6. An agriculturally usable motor vehicle according to one of the preceding claims **characterised in that** the at least two drive units (17, 18) are arranged in inclined V-shaped relationship with each other and have a synchronised mode of operation.

7. An agriculturally usable motor vehicle according to one of the preceding claims **characterised in that** the arrangement of the at least two drive units (17, 18) is in axially parallel displaced relationship.

8. An agriculturally usable motor vehicle according to one of the preceding claims **characterised in that** balancing of the operating hours ratio (28) of the drive units (17, 18) is controlled manually by the operator (29) of the motor vehicle (1, 2) by way of the display unit (30) or is implemented automatically by means of sensors by an electronic control system.

9. An agriculturally usable motor vehicle according to one of the preceding claims **characterised in that** the agriculturally usable motor vehicle (2) is in the form of a forage harvester (1) and a drive unit (17, 18) for operation of the working members (3, 5, 6, 9, 11) and the at least one further drive unit (17, 18) forms the travel drive (39) of the motor vehicle (1, 2).

10. An agriculturally usable motor vehicle according to claim 9 **characterised in that** the working members (3, 5, 6, 9, 11) include the chopping drum (6), the post-comminuting device (9), the post-acceleration device (11) and the intake members (3, 5).

11. An agriculturally usable motor vehicle according to one of the preceding claims **characterised in that** the at least two drive units (17, 18) have a common operating substance budget.

12. An agriculturally usable motor vehicle according to claim 11 **characterised in that** the common operating substance budget includes at least the engine oil circuit (40) and wherein associated with the at least two drive units (17, 18) is a common oil filler connection (43) and a common oil drain device (42).

13. An agriculturally usable motor vehicle according to one of the preceding claims **characterised in that** a starting device (44) for a drive unit (17) is associated with the at least two drive units (17, 18) and the at least one further drive unit (18) is brought into operation by the drive unit (17) started by the starting device (44).

14. An agriculturally usable motor vehicle according to one of the preceding claims **characterised in that** the at least two drive units (17, 18) are so configured that maintenance-intensive assemblies (48-50) adapted directly to at least one of the drive units (17, 18) is arranged on the drive unit (17, 18) which permits unimpeded access.

15. An agriculturally usable motor vehicle according to one of the preceding claims **characterised in that** the one drive unit (17) provides the drive for the working members (3, 5, 6, 9, 11) and/or the travel drive (39) and the at least one further drive unit (18) supports the braking function of the motor vehicle (1, 2).

## Revendications

1. Véhicule à moteur utilisable en agriculture, doté d'au moins deux unités d'entraînement (17, 18) pouvant fonctionner séparément et/ou ensemble dans une chaîne cinématique, avec chaque fois des possibilités de fourniture de puissance identiques et/ou différentes, et chaque unité d'entraînement (17, 18) comprenant des moyens pour détecter les heures de fonctionnement, **caractérisé en ce que** le véhicule à moteur utilisable en agriculture (2) comprend une unité de contrôle et d'affichage (30) et un dispositif de commande (26), et le dispositif de commande (25) est relié par un système de transmission de données (33) à des appareils de commande (26) contenant des capteurs d'état d'entraînement et/ou des données d'état d'entraînement, et l'unité de contrôle et d'affichage (30) affiche les heures de fonctionnement de l'unité d'entraînement (17, 18) respective et/ou le rapport d'heures de fonctionnement entre lesdites au moins deux unités d'entraînement (17, 18), le dispositif de commande (25) générant en fonction du rapport d'heures de fonctionnement ou des heures de fonctionnement un signal de commande (Z) qui active ou désactive les unités d'entraînement (17, 18) respectives, de façon que lesdites au moins deux unités d'entraînement (17, 18) présentent un rapport d'heures de fonctionnement (28) équilibré dans un intervalle de temps déterminé correspondant à l'intervalle de maintenance de l'unité d'entraînement (17, 18) respective, et les deux unités d'entraînement (17, 18) pouvant être mises en circuit ensemble en cas de demande de puissance plus élevée du véhicule à moteur utilisable en agriculture (1, 2), et seule l'unité d'entraînement (17, 18) présentant le moins d'heures de fonctionnement fournissant sa puissance en cas de demande de puissance plus faible pouvant être assumée par une seule unité d'entraînement (17, 18).

2. Véhicule à moteur utilisable en agriculture selon la revendication 1, **caractérisé en ce que** le rapport d'heures de fonctionnement (28) comprend la comparaison des heures de fonctionnement desdites au moins deux unités d'entraînement (17, 18), et la détermination des heures de fonctionnement tient compte de la durée de fonctionnement et d'informations d'état spécifiques à l'entraînement de l'unité d'entraînement (17, 18) respective.

3. Véhicule à moteur utilisable en agriculture selon l'une des revendications précédentes, **caractérisé en ce que**, avant la mise en service de l'unité d'entraînement (17, 18) respective, le rapport d'heures de fonctionnement (28) desdites au moins deux unités d'entraînement (17, 18) est déterminé en comparant les heures de fonctionnement des unités d'entraînement (17, 18) respectives et, pour atteindre un rapport d'heures de fonctionnement (28) équilibré, la puissance ultérieure est fournie en fonction de cette comparaison, en tenant compte de la demande de puissance du véhicule à moteur (1, 2), d'abord par l'unité d'entraînement (17, 18) présentant le moins d'heures de fonctionnement.

4. Véhicule à moteur utilisable en agriculture selon l'une des revendications précédentes, **caractérisé en ce que** les informations d'état spécifiques à l'entraînement peuvent être la vitesse de rotation du moteur, le niveau de remplissage de l'huile moteur, la consommation de carburant et la température du moteur.

5. Véhicule à moteur utilisable en agriculture selon l'une des revendications précédentes, **caractérisé en ce que** les unités d'entraînement (17, 18) sont réalisées sous la forme de moteurs diesel de catégorie de puissance identique ou différente.

6. Véhicule à moteur utilisable en agriculture selon l'une des revendications précédentes, **caractérisé en ce que** lesdites au moins deux unités d'entraînement (17, 18) sont inclinées en V l'une par rapport à l'autre et présentent un fonctionnement synchronisé.

7. Véhicule à moteur utilisable en agriculture selon l'une des revendications précédentes, **caractérisé en ce que** lesdites au moins deux unités d'entraînement (17, 18) sont décalées de manière parallèle axialement.

8. Véhicule à moteur utilisable en agriculture selon l'une des revendications précédentes, **caractérisé en ce que** l'équilibrage du rapport d'heures de fonctionnement (28) des unités d'entraînement (17, 18) peut être commandé manuellement par l'opérateur (29) du véhicule à moteur (1, 2) par l'intermédiaire de l'unité d'affichage (30) ou pris en charge automatiquement par une commande électronique au moyen de capteurs.

9. Véhicule à moteur utilisable en agriculture selon l'une des revendications précédentes, **caractérisé en ce que** le véhicule à moteur utilisable en agriculture (2) est réalisé sous la forme d'une ensileuse (1), et une unité d'entraînement (17, 18) sert à faire fonctionner les organes de travail (3, 5, 6, 9, 11) et ladite au moins une autre unité d'entraînement (17, 18) forme le système de propulsion (39) du véhicule à moteur (1, 2).

10. Véhicule à moteur utilisable en agriculture selon la revendication 9, **caractérisé en ce que** les organes de travail (3, 5, 6, 9, 11) comprennent le tambour hacheur (6), le dispositif de broyage secondaire (9), le dispositif de post-accélération (11) et les organes d'alimentation (3, 5).

11. Véhicule à moteur utilisable en agriculture selon l'une des revendications précédentes, **caractérisé en ce que** lesdites au moins deux unités d'entraînement (17, 18) présentent un bilan de matières consommables commun.

12. Véhicule à moteur utilisable en agriculture selon la revendication 11, **caractérisé en ce que** le bilan de matières consommables commun comprend au moins le circuit d'huile moteur (40), une tubulure de remplissage d'huile (43) commune et un dispositif de vidange d'huile (42) commun étant associés auxdites au moins deux unités d'entraînement (17, 18).

13. Véhicule à moteur utilisable en agriculture selon l'une des revendications précédentes, **caractérisé en ce qu'**auxdites au moins deux unités d'entraînement (17, 18) est associé un dispositif de démarrage (44) pour une unité d'entraînement (17), et ladite au moins une autre unité d'entraînement (18) est mise en service par l'unité d'entraînement (17) démarrée par le dispositif de démarrage (44).

14. Véhicule à moteur utilisable en agriculture selon l'une des revendications précédentes, **caractérisé en ce que** lesdites au moins deux unités d'entraînement (17, 18) sont configurées de façon que les groupes (48-50) nécessitant un entretien important et adaptés directement sur au moins une des unités d'entraînement (17, 18) sont disposés sur l'unité d'entraînement (17, 18) qui permet un accès sans restriction.

15. Véhicule à moteur utilisable en agriculture selon l'une des revendications précédentes, **caractérisé en ce qu'**une unité d'entraînement (17) assure l'entraînement des organes de travail (3, 5, 6, 9, 11) et/ou du système de propulsion (39), et ladite au moins une autre unité d'entraînement (18) assiste la fonction de freinage du véhicule à moteur (1, 2).
